# EUROPEAN PATENT SPECIFICATION

(11) **EP 4 107 581 B1**
(45) Date of publication and mention of the grant of the patent: **11.11.2026**
(21) Application number: 21706267.8
(22) Date of filing: 19.02.2021
(51) Int. Cl.: G02F 1/225, G02B 6/125

(54) **MACH-ZEHNDER MODULATOR**
MACH-ZEHNDER-MODULATOR
MODULATEUR DE MACH-ZEHNDER

(30) Priority: 21.02.2020 EP 20158779
(43) Date of publication of application: 28.12.2022
(73) Proprietor: Universiteit Gent, 9000 Gent (BE); Imec VZW, 3001 Leuven (BE)
(72) Inventor: BREYNE, Laurens, 8770 Ingelmunster (BE)
(74) Representative: Winger
(86) International application number: PCT/EP2021/054173
(87) International publication number: WO 2021/165474

(56) References cited:
- WO-A1-2019/162381
- US-A1- 2008 095 485
- US-A1- 2012 251 032
- US-A1- 2015 295 650
- US-A1- 2016 062 207
- US-A1- 2017 351 122
- US-A1- 2018 341 164
- US-B2- 10 551 714

## Description

### Field of the invention

The invention relates to the field of optical communication links. More specifically it relates to optical modulators for these optical communication links.

### Background of the invention

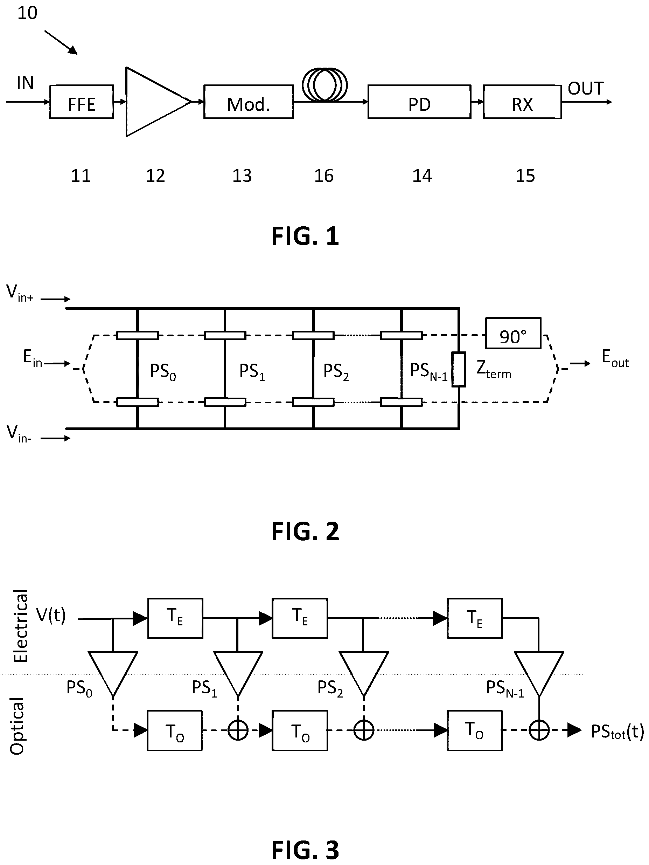

The still exponentially growing internet data traffic continues to drive the need for higher bandwidth optical communication links. An exemplary block diagram of such a communication link is shown in FIG. 1. The optical communication link comprises an electronic driver, which converts a stream of symbols into analog signals, with properties suitable to drive an electro-optical modulator. This modulator then modulates the amplitude or phase of an optical carrier, typically generated by a suitable light source such as a laser, with these symbols. This optical signal is then transferred to a photodetector over e.g. an optical fiber. At the receiver side, a photodetector converts the modulated optical signal back to an electrical signal, after which it is amplified by a low-noise electronic receiver, and the transmitted symbols are extracted again. More in general, analog signals such as radio signals can also be transported in similar fashion.

US2018/0341164 A1 describes a multi-section optical waveguide modulator wherein two waveguide arms traverse a plurality of successive modulating sections.

US2016/0062207 A1 describes a single-drive multi section Mach-Zehnder modulator driver system without equalization.

WO2019/162381 A1 describes a modulator arrangement which comprises a plurality of Mach-Zehnder modulators wherein the waveguides of different modulators are crossing in order to simplify the fabrication of the required interconnects between the drivers and the RF electrode sections.

US10551714 B2 relates to an optical interference modulator comprising primary and secondary waveguides of which at least one comprises a light phase modulating device arranged to modulate the phase of light travelling along the corresponding waveguide in either direction.

The aforementioned rapidly growing need for more bandwidth may outpace the bandwidths that can be achieved by either the driver electronics, the electro-optic modulator, the photodetector or the receiver. Moreover, signal distortion introduced by the transmission channel, for example due to chromatic dispersion of an optical fiber, may corrupt the received signal, again effectively limiting the useful bandwidth.

Today, several methods exist to overcome such bandwidth limitations. Using suitable analog filtering in the electrical domain, for example peaking in the frequency domain can be added at either the driver or receiver side which helps to enhance bandwidth (known as continuous-time linear equalization). While relatively simple to implement, the disadvantage of this method are limitations in the freedom of realizable filter shapes, required to invert the distortion introduced by the optical communication channel. Alternatively, one can use finite impulse response filters realized as e.g. feedforward equalizers (FFEs, in which the output consists of a linear combination of delayed versions of the input signals, with adjustable weights or tap coefficients), possibly in combination with decision feedback equalizers. These can be implemented in either the analog domain, or in the digital domain. In the digital domain, even more sophisticated techniques such as maximum likelihood sequence estimation can be used. The advantage of these techniques is their significantly higher capacity to overcome bandwidth limitations or other forms of signal distortion. However, the implementation complexity can be considerable. In addition, for high baudrate optical communication links power-hungry high sampling rate analog-to-digital and/or digital-to-analog converters may be required.

There is therefore a need for good building blocks, systems and methods which allow to increase the bandwidth of optical communication links.

### Summary of the invention

It is an object of embodiments of the present invention to provide a good Mach-Zehnder modulator.

The above objective is accomplished by a method and device according to the present invention.

In a first aspect embodiments of the present invention relate to an electro-optic Mach-Zehnder modulator. The modulator comprises:
- a first and a second optical waveguide,
- an optical splitter configured for splitting an incoming optical signal in a first optical signal over the first optical waveguide and a second optical signal over the second optical waveguide and an optical combiner configured for combining the optical signals from the optical waveguides,
- a plurality of pairs of electro-optic phase shifters, for each pair one phase shifter per optical waveguide, distributed over the length of the optical waveguides, each pair forming a segment of the modulator, wherein the electro-optic phase shifters are configured for phase-modulating the optical signals by means of an electrical signal,
- at least one crossing element configured for crossing the optical waveguides between two segments.

In embodiments of the present invention the Mach-Zehnder modulation may comprise at least one delay element configured for delaying the optical signals between two segments.

In embodiments of the present invention the Mach-Zehnder modulator may comprise at least one transmission line connected with inputs of the phase shifters such that phase-modulating the optical signals can be done by the electrical signal which travels over the at least one transmission line.

In embodiments of the present invention the combiner or splitter may comprise a 90° phase shifter for one of the optical waveguides.

In embodiments of the present invention a distance between adjacent segments may be the same for the different adjacent segments.

An electro-optic Mach-Zehnder modulator, according to embodiments of the present invention, may comprise an optical network which is configured for switching between a direct connection of optical waveguides between adjacent segments and/or a crossing element between the adjacent segments and/or a delay element between the adjacent segments.

In embodiments of the present invention the at least one delay element comprises an optical building block configured for introducing optical delay.

In embodiments of the present invention the segments are equal.

Alternatively a length of the phase shifter may be varying between the different pairs of phase shifters.

An electro-optic Mach-Zehnder modulator, according to embodiments of the present invention, may be configured such that, in operation, the electrical and optical signal are propagating in the same direction.

An electro-optic Mach-Zehnder modulator, according to embodiments of the present invention, may be configured such that, in operation, the electrical and optical wave are counterpropagating.

An electro-optic Mach-Zehnder modulator, according to embodiments of the present invention, may comprising one or more biasing circuits configured for separately biasing at least one of the phase shifters of the phase shifter pairs.

In embodiments of the present invention a crossing element, optionally together with a delay element, may be present between adjacent segments.

In embodiments of the present invention the Mach-Zehnder modulator may comprise a first and a second transmission line wherein the first transmission line is connected with inputs of the first phase shifters and the second transmission line is connected with inputs of the second phase shifters.

In embodiments of the present invention the Mach-Zehnder modulator may be configured for applying the electrical signal between inputs of the first and the second transmission line at first ends of the transmission lines and opposite second ends of transmission lines may be terminated with a predefined impedance between them.

In a second aspect, embodiments of the present invention relate to a communication link which comprises a transmitter, a receiver, and an optical link between the transmitter and receiver. The transmitter comprises an electro-optic Mach-Zehnder modulator according to any of the previous claims.

In a third aspect embodiments of the present invention relate to a method for designing a Mach-Zehnder modulator according to embodiments of the present invention. The method comprises introducing at least one crossing element, optionally together with at least one delay element between segments of the modulator in order to obtain a predefined transfer function.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG. 1 shows a block diagram of a communication link.
FIG. 2 shows a block diagram of a periodically loaded travelling wave Mach-Zehnder modulator (MZM) with N pairs of phase shifters.
FIG. 3 shows an equivalent block diagram of the MZM of FIG. 2.
FIG. 4 shows a block diagram of a MZM with 10 pairs of phase shifters.
FIG. 5 shows an equivalent block diagram of the MZM of FIG. 4.
FIG. 6 shows a block diagram of a travelling wave MZM wherein an optical delay element is introduced between two segments, in accordance with an exemplary embodiment.
FIG. 7 shows an equivalent block diagram of the MZM of FIG. 6.
FIG. 8 shows a block diagram of a travelling wave MZM wherein an optical crossing element is introduced between two segments, in accordance with embodiments of the present invention.
FIG. 9 shows an equivalent block diagram of the MZM of FIG. 8.
FIG. 10 and FIG. 11 show schematic block diagrams of MZMs in accordance with embodiments of the present invention.
FIG. 12 shows an equivalent block diagram of the MZM of FIG. 11.
FIG. 13 shows the simulated power transfer of a shaped MZM in accordance with embodiments of the present invention divided by the simulated power transfer of a standard MZM wherein the power transfer is simulated from the electrical input from the Mach-Zehnder modulator to the optical output of the modulator.
FIG. 14 shows the layout of the shaped MZM 100 of FIG. 11 for a silicon integrated photonics platform.
FIG. 15 shows a segment cross section of a pair of PN-junctions with abutted N-regions used as a pair of phase shifters.
FIG. 16 shows a segment cross section of a pair of PN-junctions with abutted N-regions used as a pair of phase shifters.
FIG. 17 and 18 shows possible electrical schematics of the cross-sections in FIG. 15 and FIG. 16.
FIG. 19 shows a segment cross section of a pair of PN-junctions with GSSG structure.
FIG. 20 shows electrical schematics of the cross section illustrated in FIG. 19 with 2 separate PN-junctions.
FIG. 21 shows a segment cross section of a pair of PN-junctions with GSSG structure.
FIG. 22 shows electrical schematics of the cross section illustrated in FIG. 21.
FIG. 23 shows a segment cross section of a pair of PN-junctions with GS structure.
FIG. 24 shows electrical schematics of the cross section illustrated in FIG. 23.
FIG. 25 shows the simulated and measured power transfer of a shaped MZM in accordance with embodiments of the present invention and the simulated and measured power transfer of a standard MZM.
FIG. 26 shows the simulated and measured power transfer of the shaped MZM of FIG. 25 divided by the simulated and measured power transferred of the standard MZM of FIG. 25.
FIG. 27 shows a test setup which was used for validating a MZM according to embodiments of the present invention and comparing it with a standard MZM.
FIG. 28 shows the obtained bit error rate in function of the power incident on the EDFA for a shaped MZM and for a standard MZM.
FIG. 29 shows the obtained eye diagrams for a shaped MZM and for a standard MZM.
FIG. 30 shows a schematic drawing of a shaped MZM comprising different biasing circuits, in accordance with embodiments of the present invention.
FIG. 31 shows a schematic drawing of a continuous MZM design wherein the pair of phase shifters is interrupted for a delay element and for a crossing element.
FIG. 32 shows the 3 dB EO bandwidth in function of V_{π} of a standard MZM and of a shaped MZM in accordance with embodiments of the present invention.
FIG. 33 shows a schematic drawing of a communication link in accordance with embodiments of the present invention.

Any reference signs in the claims shall not be construed as limiting the scope. In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

In the description provided herein, numerous specific details are set forth. However, it is understood that embodiments of the invention may be practiced without these specific details. In other instances, well-known methods, structures and techniques have not been shown in detail in order not to obscure an understanding of this description.

FIG. 1 shows a communication link 10 which comprises a FFE 11, a driver 12, and a modulator 13 at the transmit side, a photodiode 14 and a receiver 15 at the receive side, and an optical link 16 between them. In the present invention the modulator is a Mach-Zehnder modulator (MZM). The present invention realizes the capability to shape the electro-optical frequency response of a Mach-Zehnder modulator purely in the optical domain. This allows for example to increase the effective electro-optical bandwidth of the resulting Mach-Zehnder modulator, or counteract signal distortion introduced by chromatic dispersion of an optical fiber. The invented technique is entirely passive, i.e. does not require any additional electrical circuits and hence no additional power consumption, required for conventional electrical equalization methods.

When focusing on the field of MZMs, the following approaches are taken in most practical prior art to improve the bandwidth or to introduce peaking in the modulator frequency response. In most materials systems, the MZMs are relative long (a few millimeter to a few centimeter) in order to have a sufficiently large interaction between the electrical and optical signal. At high speeds, the wavelength of the electrical signal becomes small compared to the dimensions of the MZM and transmission line effects start to become apparent. These effects may be used to improve the bandwidth or to introduce peaking in the modulator response. Such techniques include (but are not limited to):
- Periodically loaded travelling wave MZMs;
- Terminating the transmission line with a mismatched impedance to introduce reflections;
- Adding feedback and active elements to counteract bandwidth limitations.
Other optimizations focus on the phase shifters themselves:
- Junction engineering in PN-phase shifters;
- Utilizing more exotic materials.
While these techniques might increase the bandwidth (some even quite considerably), the degrees of freedom to create FIR filters are still very limited. Furthermore, said techniques require significant changes on a technology level (like junction engineering or using exotic materials) or face complex implementations (like active feedback on the transmission line).

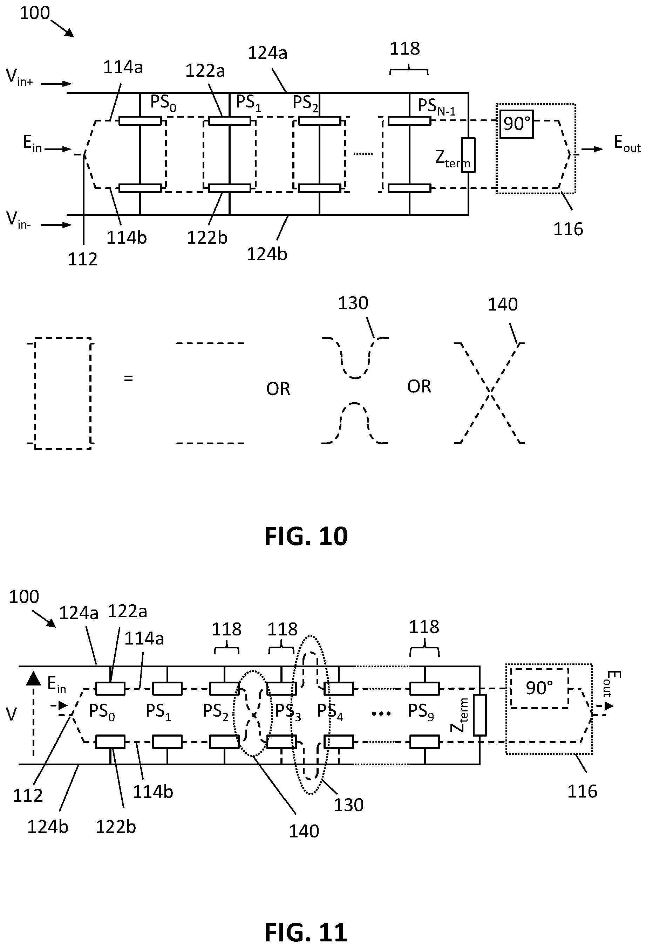

In a first aspect embodiments of the present invention relate to an electro-optic Mach-Zehnder modulator 100, more specifically a periodically loaded travelling wave MZM. A schematic block diagram of such a modulator is shown in FIG. 10. The modulator comprises a first and a second optical waveguide 114a, 114b.

The Mach-Zehnder modulator, moreover, comprises an optical splitter 112 configured for splitting an incoming optical signal in a first optical signal over the first optical waveguide 114a and a second optical signal over the second optical waveguide 114b and an optical combiner 116 configured for combining the optical signals from the optical waveguides 114a, 114b.

The Mach-Zehnder modulator, moreover, comprises a plurality of pairs of electro-optic phase shifters 122a, 122b. Each pair comprises one phase shifter 122a, 122b per optical waveguide 114a, 114b. The pairs of electro-optic phase shifters are distributed over the length of the optical waveguides 114a, 114b. Each pair is forming a segment 118 of the modulator. The electro-optic phase shifters are configured for phase-modulating the optical signals. They are controlled by means of an electrical signal.

The Mach-Zehnder modulator, moreover, comprises at least one crossing element 140 configured for crossing the optical waveguides between two segments 118. In embodiments of the present invention there is no interaction between the optical signals in a crossing. The Mach-Zehnder modulator may comprise one or more delay elements 130 configured for delaying the optical signals between two segments 118.

In embodiments of the present invention both the crossing element and the delay element may be present.

In embodiments of the present invention the delay element provides an additional optical delay between two adjacent segments compared to the delay between two other segments between which no such delay element is present.

In FIG. 10 a square with dashed lines represents a direct connection of optical waveguides, or a delay element 130, or a crossing element 140 or a combination of these elements. In embodiments of the present invention the Mach-Zehnder modulator comprises at least one crossing element 140.

In embodiments of the present invention shaping may be achieved by only using a delay element 130.

In embodiments, not part of the present invention shaping may be achieved by only providing a crossing element 140 between two segments, wherein the optical delay of the crossing element is different from zero.

When a delay element and a crossing element are inserted the optical delay of the crossing element may be the same as the optical delay of the delay element. This is, however, not strictly required.

If, in embodiments of the present invention, multiple crossing elements or delay elements are inserted, these should not necessarily have the same delay.

It is an advantage of embodiments of the present invention that by adding a crossing element between segments, the EO frequency response can be altered to extend the modulator bandwidth or induce peaking to overcome other bandwidth limitations in the optical link. Additionally an optical delay element may be added for altering the EO frequency response or to extend the modulator bandwidth or induce peaking to overcome other bandwidth limitations in the optical link.

It is an advantage of embodiments of the present invention that a passive structure may be obtained that does not require any additional power consumption to achieve frequency response shaping.

It is an advantage of embodiments of the present invention that no additional electric circuits for shaping the frequency response are required, thus saving chip area for the electronics.

It is an advantage that a MZM 100 according to embodiments of the present invention still behaves as a normal MZM (optically broadband, low chirp, same DC-characteristics, same insertion loss, but at a lower extinction ratio).

It is an advantage that the manufacturing process for the photonic modulator, according to embodiments of the present invention does not need any alterations to realize the MZM structure (assuming the initial process could manufacture MZMs). Indeed, in embodiments of the present invention there are only changes to the routing of the optical waveguides, not to the phase shifters or the transmission lines. For example the standard PN-junctions of the said process may be used for the phase shifters.

It is an advantage of embodiments of the present invention that when non-return-to-zero (NRZ) signaling is used, the electrical driver should not have a linear output stage.

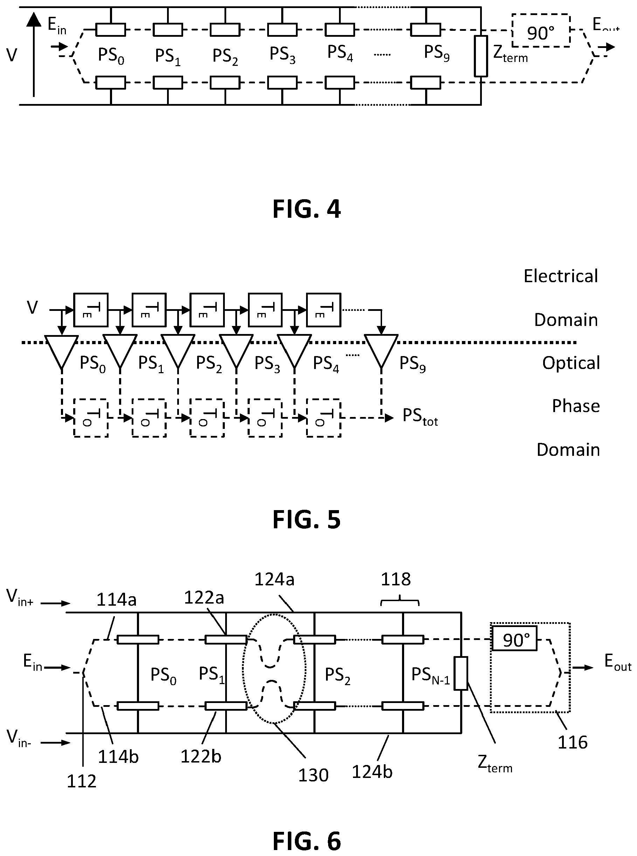

A block diagram of a travelling wave Mach-Zehnder modulator (TW-MZM) is shown in FIG 2 and FIG. 4. Whereas in FIG. 2 the number of pairs of phase shifters is N, FIG. 4 shows an example wherein the number of phase shifters is 10. The number of pairs of phase shifters may for example vary between 2 and 20, for example between 5 and 15.

The MZM of FIG. 2 comprises a transmission line that is periodically loaded with two electro-optic phase shifters in series (forming a segment). The transmission line is terminated with an impedance Zₜₑᵣₘ. All phase shifters are connected in cascade to form a dual-arm Mach-Zehnder Modulator (MZM). This is, however, not strictly required. Also a single-arm (push-pull) MZM configuration is possible. An electrical signal is travelling over the transmission line (the continuous line in FIG. 2). An optical signal is travelling in the waveguides (the dashed lines in FIG. 2).

The voltage on the transmission lines induces a phase difference between the top and bottom arm of the Mach Zehnder. In combination with the 90° phase shift, this results in the following transmission characteristic in DC (neglecting all losses and assuming ideal linear phase shifters): $\frac{{P}_{out}}{{P}_{in}} = \frac{{\left|{E}_{out}\right|}^{2}}{{\left|{E}_{in}\right|}^{2}} = \frac{1}{2} \left(1+cos\left(90°\frac{π}{180 °}+\left({\sum }_{i = 0}^{N - 1} {PS}_{i} . V\right)\frac{π}{180 °}\right)\right)$

With Pₒᵤₜ and Pᵢₙ the optical power at the out- and input of the modulator, PSᵢ.V the phase difference induced by the i^{th} segment due to the applied voltage V and V=Vᵢₙ₊-Vᵢₙ₋. The inventors made an equivalent block diagram of the modulator of FIG. 2. This equivalent block diagram is shown in FIG. 3. From this diagram, the relation between the voltage applied to the input of the transmission line and the phase difference (in the optical domain) between the upper and lower arm is given. Delays between subsequent segments are taken into account. Here, it is assumed that the distance between adjacent segments is the same over the full MZM. In embodiments of the present invention the electrical delay between the adjacent segments may be the same for the different adjacent segments. The delay of the electrical and optical signal between 2 adjacent segments is T_{E} and T_{O}. The inventors obtained the following formula for the total phase shift PSₜₒₜ(t) in the time domain between both arms of the MZM: $\begin{matrix}{PS}_{tot} \left(t\right) = {\sum }_{i = 0}^{N - 1} {PS}_{i} . V \left(t-i.{T}_{E}-\left(N-1-i\right).{T}_{O}\right) = {\sum }_{i = 0}^{N - 1} {PS}_{i} . V \left(t-\left(N-1\right).{T}_{E}\right) \\ = {\sum }_{i = 0}^{N - 1} {PS}_{i} . V \left(t′\right)\end{matrix}$

For this equation an ideal transmission line and linear phase shifters are assumed. In embodiments of the present invention the velocity of the (modulating) electrical signal traveling on the transmission line and the optical signal (undergoing modulation) in the optical waveguide may be matched, such that T_{E}=T_{O}. According to the equation for the phase shift shown above the different phase shifts add perfectly together yielding the maximal modulation efficiency and bandwidth, if T_{E}=T_{O}.

The invention is, however, not limited to MZMs wherein the optical delay over the optical waveguides is equal to an electrical delay between the adjacent segments (if no delay element is present between the segments).

FIG. 5 shows the equivalent block diagram of the modulator of FIG. 4. In the example T_{E}=T_{O}, and all segments are identical PS=PSᵢ.

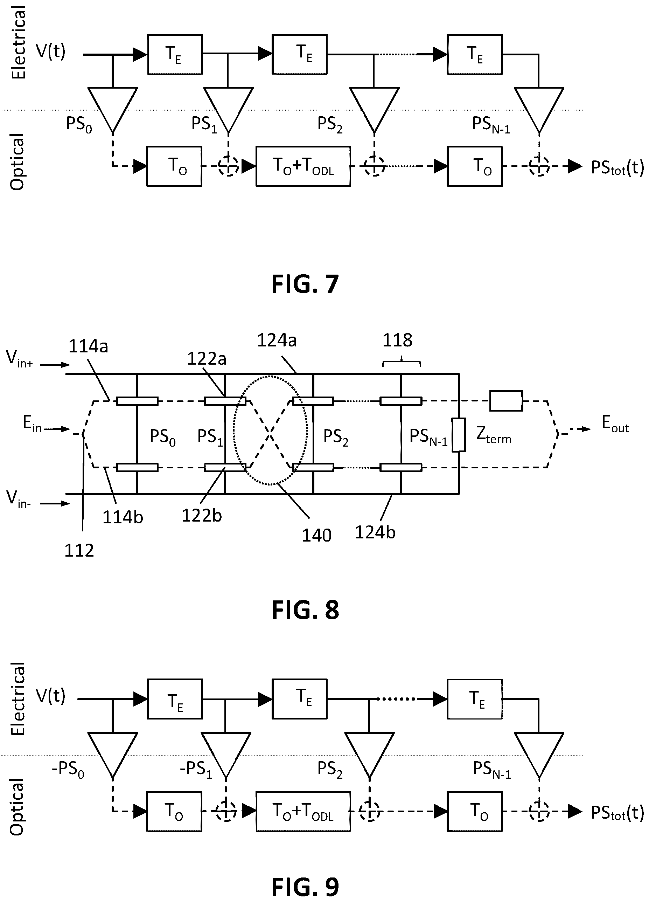

In embodiments of the present invention equalization is achieved by replacing certain optical connections between consecutive segments by a crossing element 140, optionally together with a delay element 130. This is the key idea of this invention. If a delay element is inserted between two consecutive segments (in this case segment 1 and 2), the structure of FIG. 6 is obtained. The equivalent block diagram is shown in FIG. 7.

In embodiments of the present invention the delay element may be an optical building block configured for introducing delay. This may for example be a delay line or a ring resonator. Assuming the optical delay line (ODL) introduces an additional delay T_{ODL}, the following response can be derived: $\begin{matrix}{PS}_{tot} \left(t\right) = {\sum }_{i = 0}^{1} \left({PS}_{i}. V\left(t-i. {T}_{E}-\left(N-1-i\right). {T}_{O}-{T}_{ODL}\right)\right) \\ + {\sum }_{i = 2}^{N - 1} \left({PS}_{i}. V\left(t-i. {T}_{E}-\left(N-1-i\right).{T}_{O}\right)\right)\end{matrix}$

Only the optical signal travelling in the segments before the optical delay line undergo an extra delay. If T_{E}=T_{O} the following equation can be obtained (see also the simplification above): ${PS}_{tot} \left(t\right) = {\sum }_{i = 0}^{1} \left({PS}_{i}. V\left(t′-{T}_{ODL}\right)\right) + {\sum }_{i = 2}^{N - 1} \left({PS}_{i}. V\left(t′\right)\right)$

Converting this equation to the z-domain results in the following equation: ${PS}_{tot} = \left(\left({\sum }_{i = 0}^{1} {PS}_{i}\right){z}^{- 1}+\left({\sum }_{i = 2}^{N - 1} {PS}_{i}\right)\right) V$

With: ${z}^{- 1} = exp \left(-j\frac{2 πf}{{f}_{s}}\right) , {f}_{s} = \frac{1}{{T}_{ODL}}$ In the equation in the z-domain, a transfer function from V to PSₜₒₜ of the form a.z⁻¹+b is observed (with a,b>0), indicating that frequency response of the MZM can be shaped to a lowpass characteristic by introducing delay. Note that delay can be added between any two segments and that multiple delays can be added to obtain more complex transfer functions. The maximal filter order is limited by the number of segments.

By introducing delay, all terms in the z-domain transfer function are positive. As a result, introducing delay will decrease the bandwidth if T_{E}=T_{O}. By introducing a crossing 140 between 2 segments, a negative coefficient can be generated. The corresponding structure and block diagram are shown in FIG. 8 and FIG. 9. In embodiments of the present invention the crossing 140 may introduce a delay which is chosen equal to the delay of the optical delay element 130. Assuming that the electrical signal over the respective transmission lines (voltage) introduces a phase difference between the upper and lower arm that is positive, then due to the crossing, the phase difference introduced by PS₀ and PS₁ observed at the output of the MZM will be negative. This results in the following response: $\begin{matrix}{PS}_{tot} \left(t\right) = - {\sum }_{i = 0}^{1} \left({PS}_{i}.V\left(t-i.{T}_{E}-\left(N-1-i\right).{T}_{O}-{T}_{ODL}\right)\right) \\ + {\sum }_{i = 2}^{N - 1} \left({PS}_{i}.V\left(t-i.{T}_{E}-\left(N-1-i\right).{T}_{O}\right)\right)\end{matrix}$ ${PS}_{tot} \left(t\right) = - {\sum }_{i = 0}^{1} \left({PS}_{i}. V\left(t′-{T}_{ODL}\right)\right) + {\sum }_{i = 2}^{N - 1} \left({PS}_{i}. V\left(t′\right)\right)$ ${PS}_{tot} = \left(-\left({\sum }_{i = 0}^{1} {PS}_{i}\right){z}^{- 1}+\left({\sum }_{i = 2}^{N - 1} {PS}_{i}\right)\right) V$

In the first equation, a transfer function from V to PSₜₒₜ of the form -a.z⁻¹+b is observed (with a,b>0). A FIR filter with negative tap is obtained. With this kind of filters, peaking at higher frequencies can be introduced resulting in a higher modulator bandwidth.

A MZM 100 according to embodiments of the present invention may comprise multiple delay elements (e.g. optical delay lines) and crossing elements to generate more complex transfer functions in order to optimize the bandwidth or generate sufficient peaking to mitigate other bandwidth limitations (i.e. losses on the electrodes of the transmission line). In some embodiments of the present invention, even passband responses can be generated.

A Mach-Zehnder modulator according to embodiments of the present invention may comprise a first and a second transmission line 124a, 124b. The first transmission line 124a is connected with inputs of the first phase shifters 122a and the second transmission line 124b is connected with inputs of the second phase shifters 122b, such that phase-modulating the optical signals can be done by an electrical signal over the respective transmission lines.

There are also single-arm (push-pull) periodically loaded TW-MZM implementations possible (with slight rearrangements in the connections of the PN-junctions to the electrodes). In this case, a single transmission line is sufficient to make an MZM, in accordance with embodiments of the present invention. Both phase shifters of the pairs of phase shifters are connected to the single transmission line such that phase-modulating of the optical signals can be done by an electrical signal on the single transmission line.

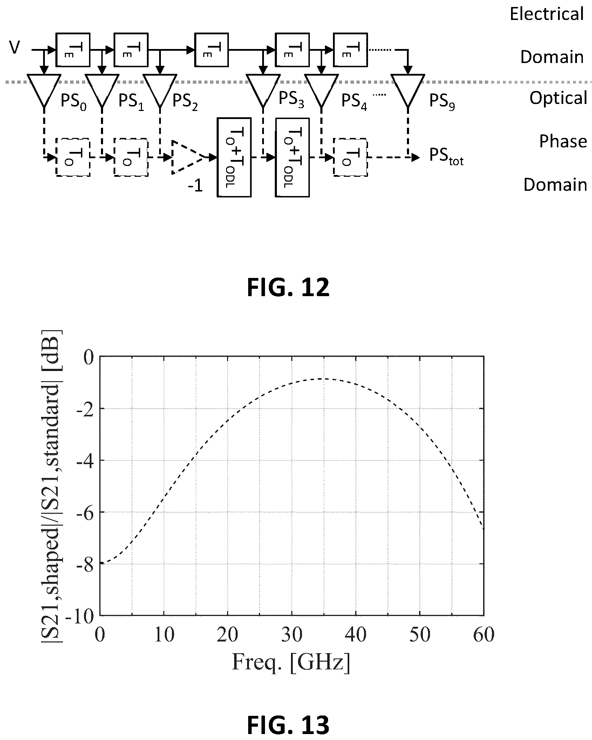

An exemplary embodiment of a MZM 100 according to the present invention is schematically drawn in FIG. 11. Also in this exemplary embodiment an optical crossing and a delay line are inserted between the segments. The corresponding block diagram is shown in FIG. 12. If T_{E}=T_{O} and if all segments are identical the following response can be derived: ${PS}_{tot} = - 3 PS \left(t-2{T}_{ODL}\right) + PS \left(t-{T}_{ODL}\right) + 6 PS \left(t\right)$

In the z-domain this becomes: $\frac{{PS}_{tot}}{PS} = \frac{- 3 {z}^{- 2} + {z}^{- 1} + 6}{10}$

The peaking of the exemplary MZM of FIG. 11 can be used to compensate for the bandwidth deterioration due to a chromatic dispersive channel.

The graph in FIG. 13 shows the power transferred from the electrical input to the optical output of a shaped MZM accordance with embodiments of the present invention divided by the power transferred from the electrical input to the optical output of a standard MZM. The power transfer is defined as the ratio of the swing of the optical power at the output of the modulator and the power sent into the electrical input of the modulator. For this example the delay of the crossing and of the delay element T_{ODL} was 7 ps resulting in a 500 µm waveguide.

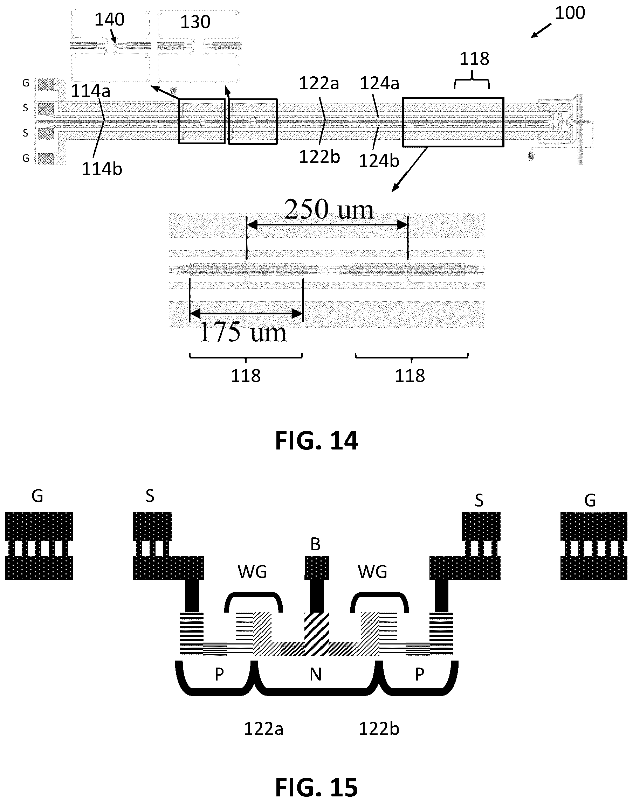

FIG. 14 shows the layout of the shaped MZM 100 of FIG. 11 for a silicon integrated photonics platform. An MZM according to embodiments of the present invention may be implemented using different silicon integrated photonics platforms. Also other photonic platforms such as III-V materials may be used. On the prototype drawing the optical waveguides 114a, 114b, the electro-optic phase shifters 122a, 122b, the first and second transmission line 124a, 124b, the delay element 130, and the crossing element 140 can be distinguished. Insets of a delay element 130 and of a crossing element 140 are shown. These insets show how a crossing and delay can be implemented in optical waveguides. Also, an inset of two segments 118 is shown. In this example the 10 segments are each 175 µm long and have a pitch of 250 µm. The invention is, however, not limited thereto.

In this example the modulator is 2.5 mm long. In this example a 56 Gb/s transmission is targeted and the delay is optimized using simulations to have maximal peaking at 25-30 GHz. In this example the optimum delay is 7 ps, resulting in a 500 µm delay line.

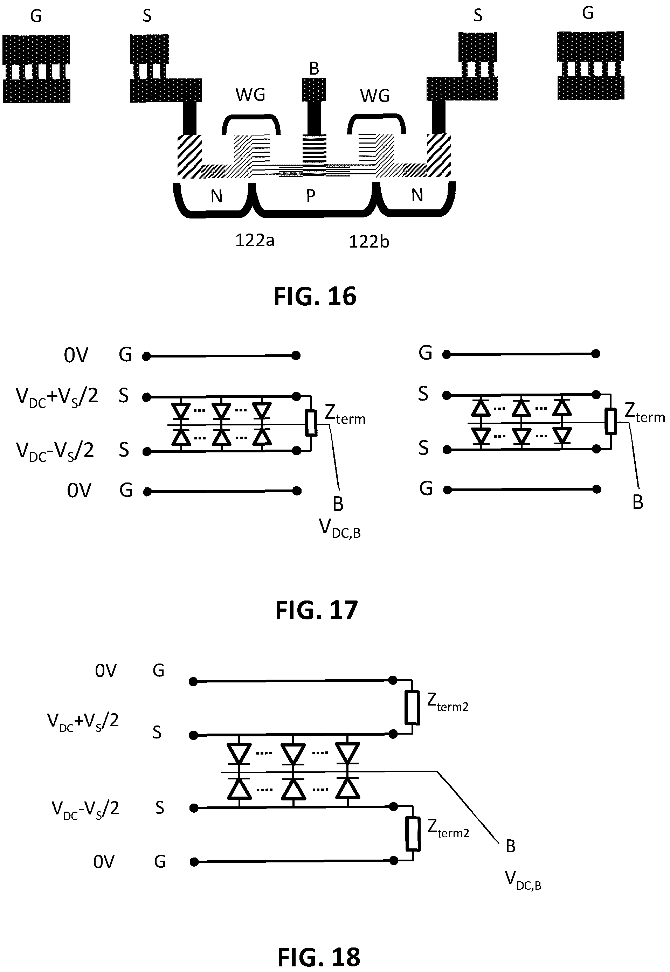

FIG. 15 shows a segment cross section of two PN-junctions with abutted N-regions used as a pair of phase shifters 122a, 122b. The PN junctions may have the same dimensions as those of a standard MZM. A differential GSSG electrode configuration is used. Alternatively the P- and N- regions can be switched resulting in two PN-junctions with abutted P-regions. An example thereof is illustrated in FIG. 16. The operation of a pair of phase shifters remains the same except for the bias voltage on the B-line which should be adjusted.

It is not required to connect the PN-junctions in the way demonstrated here. Each PN junction can also be connected between the G and the S-line. The depletion PN junction phase shifters are placed in series with the signal lines (i.e. the transmission lines 124a, 124b) and are biased through an inductive line. Termination resistors are present on-chip, a thermo-optic heater may be used to bias the MZM at quadrature. The standard MZM uses exactly the same design but with direct connections between all segments.

FIG. 17 shows possible electrical schematics (without showing the optical waveguides) of the cross-sections in FIG. 15 and FIG. 16. The left drawing shows a possible electric schematic of the cross-section in FIG. 15. The right drawing shows a possible electric schematic of the cross-section in FIG. 16. The voltages that may be applied to the pins are also added to the figure. The differential voltage (=data) applied to S-pins is Vs.

It is also possible to use different ways of terminating the transmission lines. The operation of the MZM is unaffected by this. An example thereof is illustrated in FIG. 18. Remark that more complex termination circuits are even possible.

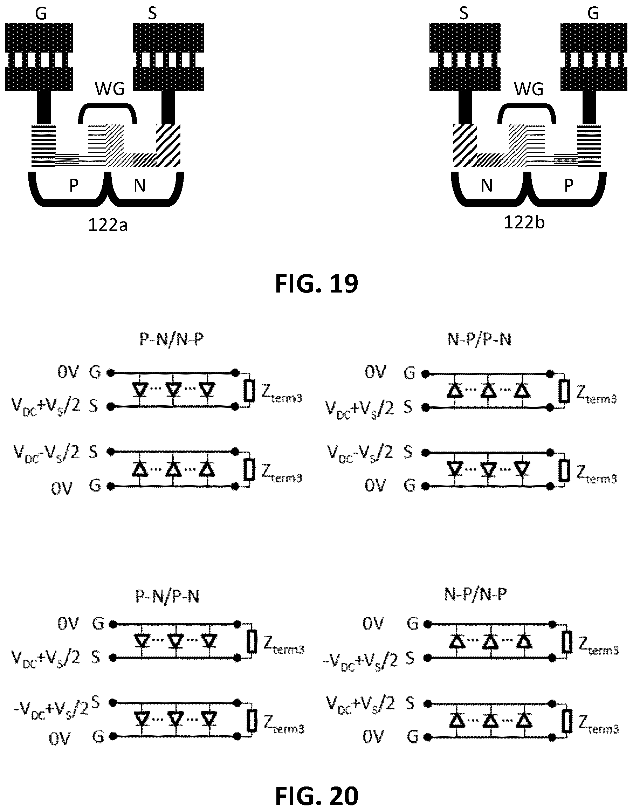

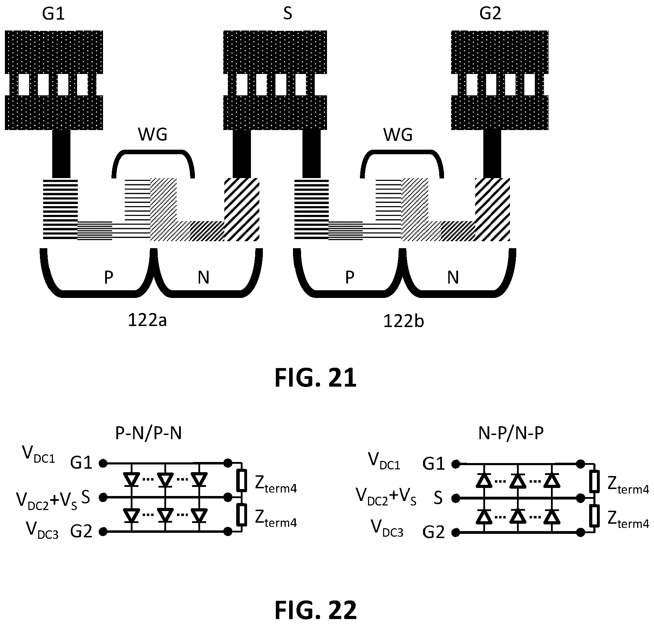

Possible variants with GSSG structure (dual arm) are illustrated in FIG. 19 and FIG. 22. In these examples the PN junctions are separated.

The PN junctions are now biased by applying a DC-voltage between the S- and G-lines. This DC-voltage should be added to the S-pins together with the data signal, so a bias-T should be added to avoid issues with applying both an AC and DC-signal to the same line.

In this case, the P- and N-regions can be switched, but care should be taken that they are biased in the their correct operating regions (both should have the same reverse bias voltage), and that the phase shifters introduce opposite phase shifts.

The currently drawn example is the P-N/N-P configuration, but the N-P/P-N configuration is also possible. Both require a differential voltage at the GSSG pins to operate.

However, if one choses to use the P-N/P-N configuration or the N-P/N-P configuration, differential signaling on the GSSG pins will result in identical phase shifts in both arms. In that case, an identical voltage should be applied to both S-pins.

FIG. 20 shows electrical schematics of the cross section illustrated in FIG. 19 with 2 separate PN-junctions. A P-N/N-P variant, a N-P/P-N variant, a P-N/P-N variant, and a N-P/N-P variant are shown. Notice that different ways of terminating the transmission lines are possible.

FIG. 21 shows a possible variant with GSG structure (single arm). The data signal is applied to the S-line, no data signal is applied to G1 and G2. The DC-bias for the PN-junctions is provided by applying a voltage between the G1-S pair and G2-S pair. The DC-voltage on G1 and G2 are not equal (unless the P-N junctions are biased at 0V). In this case, the P-N regions can not be independently switched like in the previous case, the only possibilities are P-N/P-N (see FIG. 22 which shows the electrical schematics) and N-P/N-P. the left schematic shows the P-N/P-N variant, and the right schematic shows the N-P/N-P variant. Also in this case different ways of terminating the transmission lines are possible.

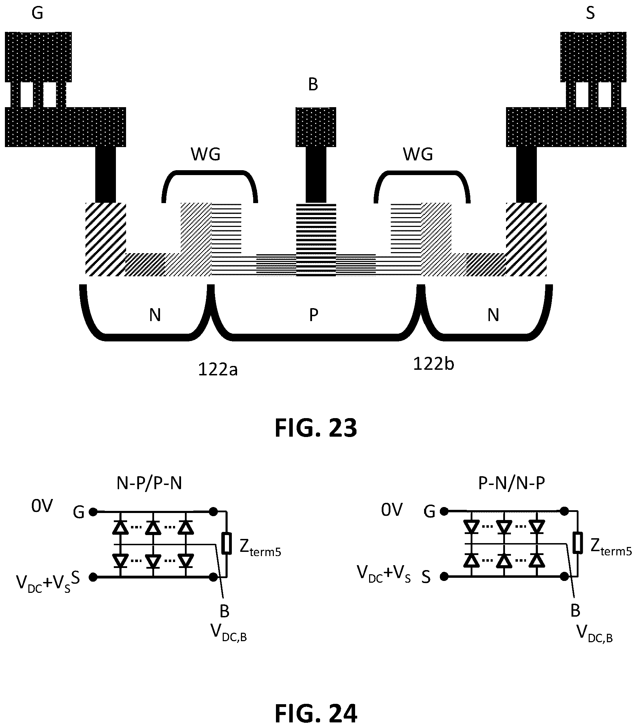

FIG. 23 shows a possible variant with a GS structure (single arm). The signal is applied to the S-pin, the DC-voltage between G- and S-line is 0V. A DC-voltage is applied to the inductive B-line to bias the P-N junctions. In this case, the P-N regions can not be independently switched. As shown In FIG. 24 the only possibilities are N-P/P-N (left schematic) and P-N/N-P (right schematic). Also in this case different ways of terminating the transmission lines are possible.

Hence, in embodiments of the present invention the pairs of electro-optic phase shifters which are configured for phase-modulating the optical signals may be PN-junctions. These may be connected in different ways with one or two transmission lines. Electro-optic phase shifters as known by the person skilled in the art may be used and they may be electrically connected in accordance with electrical connection schemes known by the person skilled in the art.

In the different variants, there are always pairs of electro-optic phase shifters with for each pair one phase shifter per optical waveguide. They are connected or driven in such a way that the data signal introduces a positive phase shift in one arm and a negative phase shift in the other arm of the MZM. In this way, the optical crossings can be inserted together with optical delays between segments to obtain frequency response shaping.

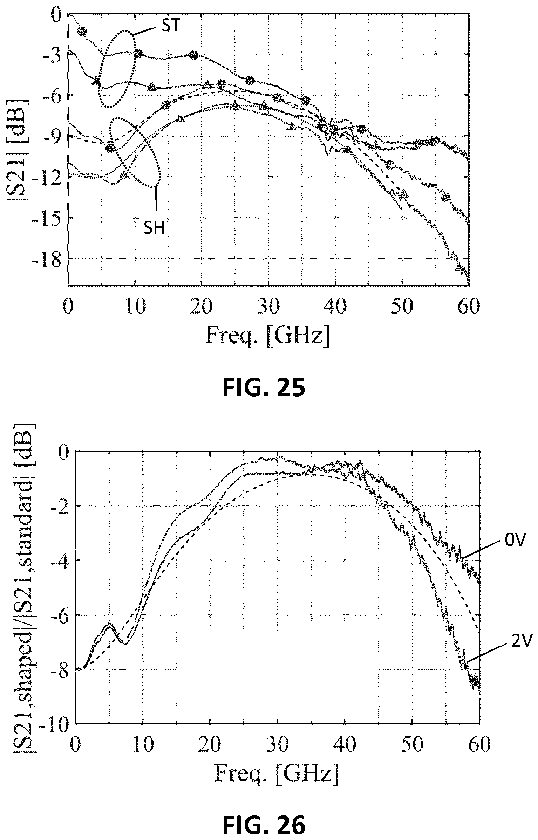

The bundle of graphs indicated by SH in FIG. 25 shows the measured power transferred from the electrical input to the optical output of a shaped MZM in accordance with embodiments of the present invention for different reverse bias voltages (0V reverse bias indicated by the circles, and 2V reverse bias indicated by the triangles). The dashed lines shows the simulation results. The bundle of graphs indicated by ST in FIG. 25 shows the measured power transferred from the electrical input to the optical output of a standard MZM for different reverse bias voltages (0V reverse bias indicated by the circles, and 2V reverse bias indicated by the triangles).

FIG. 26 shows the power transferred from the input (Eᵢₙ) to the output (Eₒᵤₜ) of the shaped MZM of FIG. 25 divided by the power transferred from the input (Eᵢₙ) to the output (Eₒᵤₜ) of the standard MZM of FIG. 25 for different voltages. The dashed line shows the transfer function: $\frac{{PS}_{tot}}{PS} = \left(-3{z}^{- 2}+{z}^{- 1}+6\right) / 10$

As can be seen the measurement results and the theoretical transfer function are close to each other.

Measurements on these examples show that at DC, the V_{π} (defined as the voltage that should be applied to the input of the modulator to obtain a 180 degree phase shift between the outputs of the phase shifters in both arms) of the standard and shaped modulator is respectively 11.8V and 29.6V (PN reverse bias 1V). The reason therefore is that in this example only 4 of the 10 segments are actually contributing to the DC phase shift. The insertion loss at a reverse bias of 1V coming from the PN junctions is in both designs very similar, 2.6 dB and 3.1 dB for the standard and shaped modulator respectively. The small deviation is caused by 0.3 dB loss from the crossing and 2 times 0.1 dB from the additional waveguide. The transfer functions were measured using a vector network analyzer and a 70 GHz photodiode, the results are shown in FIG. 25. The 3 dB bandwidth of the standard modulator is 21 and 25.1 GHz at 0 and 2V. For the shaped modulator, there is 3.2 dB peaking at 23.2 GHz for 0 V reverse bias, which increases to 4.6 dB at 23.8 GHz for a reverse bias of 2 V. The change in junction capacitance changes the transmission line characteristics resulting in more or less peaking. The reference amplitude is chosen at 1 GHz. Our simulations of the shaped modulator (valid up to 40 GHz) show good similarity with the measurements. By dividing the transfer functions of the shaped and standard modulator, the electrical effects can be eliminated and the effect of the transfer function shaping can be investigated.

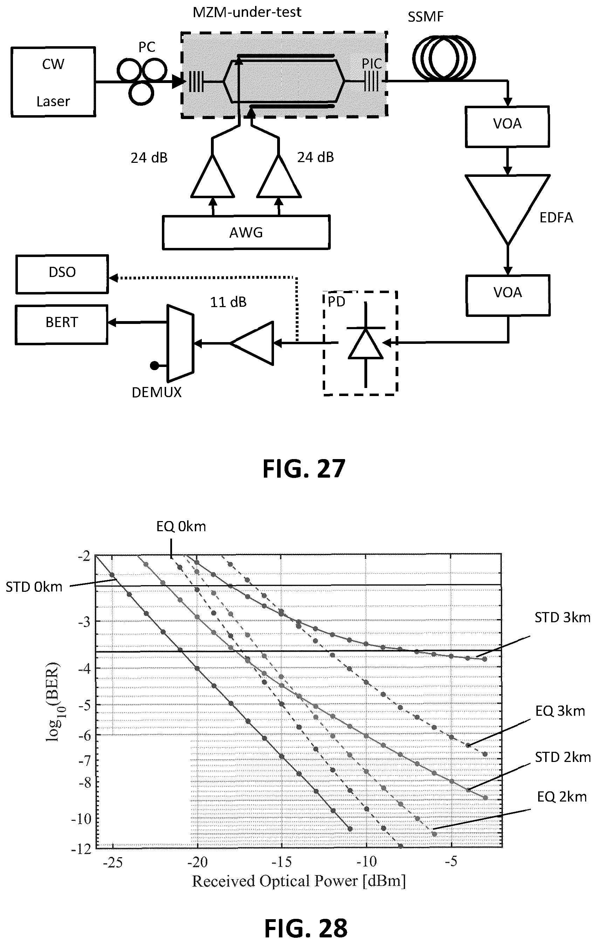

FIG. 27 shows a test setup which was used for validating a MZM according to embodiments of the present invention and comparing it with a standard MZM. The tests were done for different fiber lengths. A transmission experiment at 56 Gb/s NRZ signal (consisting of data from a PRBS sequence with a length of 2¹⁵-1 bits) was conducted to analyze the performance improvement of the shaped design. The laser generates 13 dBm at 1550 nm. A polarization controller is used before light is sent to the polarization sensitive grating coupler through the fiber probe. The MZM-under-test is driven by the arbitrary waveguide generator (AWG) and 2 x 24 dB amplifiers to obtain 4 V_{ppdiff} at the input of the MZM. The TX power launched into the fiber is around 1 dBm. The 12 dB insertion loss of the TX consists of 2x3 dB from the grating couplers, 3 dB from the phase shifters and 3 dB because the MZM is biased at quadrature. To optimize the extinction ratio (ER), the PN junctions are reverse biased at 0.5V. The modulated optical signal is sent through 0, 2 or 3 km SSMF. A variable optical attenuator (VOA) is placed to control the light entering the erbium doped fiber amplifier (EDFA). The EDFA, subsequent optical filter, VOA and 70 GHz photodiode compose a reference receiver. The EDFA helps to increase the RX sensitivity as no TIA is used. The optical filter is 1.2 nm wide and is used to suppress the ASE-ASE beating noise from the EDFA. The output of the PD is connected to a sampling scope to observe the eye diagrams or to an 11 dB amplifier and a DEMUX to create two 28 Gb/s streams of which one is analyzed by the BER tester.

FIG. 28 shows the obtained log₁₀(BER) in function of the power incident on the EDFA for a shaped MZM (EQ) and for a standard MZM and this for different fiber lengths (0, 2, and 3 km). The shaped MZMs are shaped in accordance with embodiments of the present invention. At 0 km, the penalty in modulation efficiency between the standard and shaped MZM is clearly visible as a power penalty of 4 dB at 7% OH HD-FEC (pre-FEC BER: 3.8e-3) and 3.5 dB at KP4-FEC (pre-FEC BER: 4.2e-4). At 2 km, the shaped MZM is 2.5 dB and 1.5 dB worse at HD- and KP4-FEC than the standard design. However, at higher powers, the shaped modulator can achieve a BER <1e-12, which is not possible with the standard MZM. At 3 km, the shaped modulator is 1.5 dB worse at HD-FEC, but 5 dB better at KP4-FEC. At the maximum power in the EDFA, -3 dBm limited by the insertion loss of the fiber and VOA, the BER of the shaped modulator is 3 decades better than the standard design. Further tuning of the transfer function used for the shaped frequency response may improve the ER while keeping enough peaking to counteract the dispersive link.

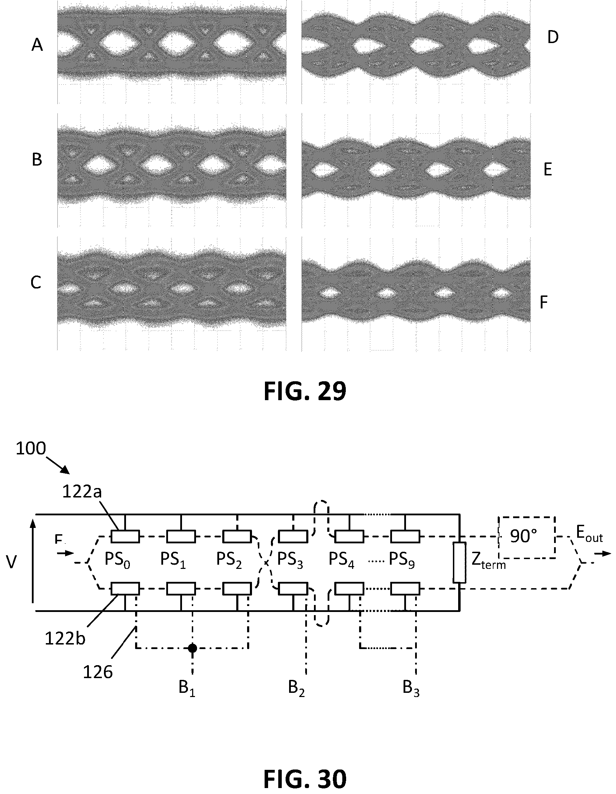

In FIG. 29 the various eyes at the PD output are shown. Eye diagrams A (0km, ER=1.96dB), B (2km, ER=1.75dB), and C (3km, ER=1.41dB) are obtained using the exemplary standard MZM, and eye diagrams D (0km, 1.5dB), E (2km, ER=1.28dB), and F (3km, ER=1.09dB) are obtained using the exemplary shaped MZM in accordance with embodiments of the present invention.

In embodiments of the present invention one or more biasing circuits 126 may be present for separately biasing at least one of the phase shifters 122a, 122b of the phase shifter pairs. An example of such a phase shifter pair is shown in FIG. 15. It shows two PN-junctions with abutted N-regions. Biasing may be done at the biasing node B. The bias voltage of the segments affect the modulation efficiency. For example, varying the biasing voltage between -1 and -3V may result in a Vₚᵢ of the shaped modulator which ranges between 29.6 V and 37.4 V. The length of the shaped modulator may for example be 4*175 µm. FIG. 30 shows an example of a MZM in accordance with embodiments of the present invention which comprises 3 different biasing circuits B1, B2, B3 for separately biasing pairs of phase shifters. By doing so a more flexible response may be obtained.

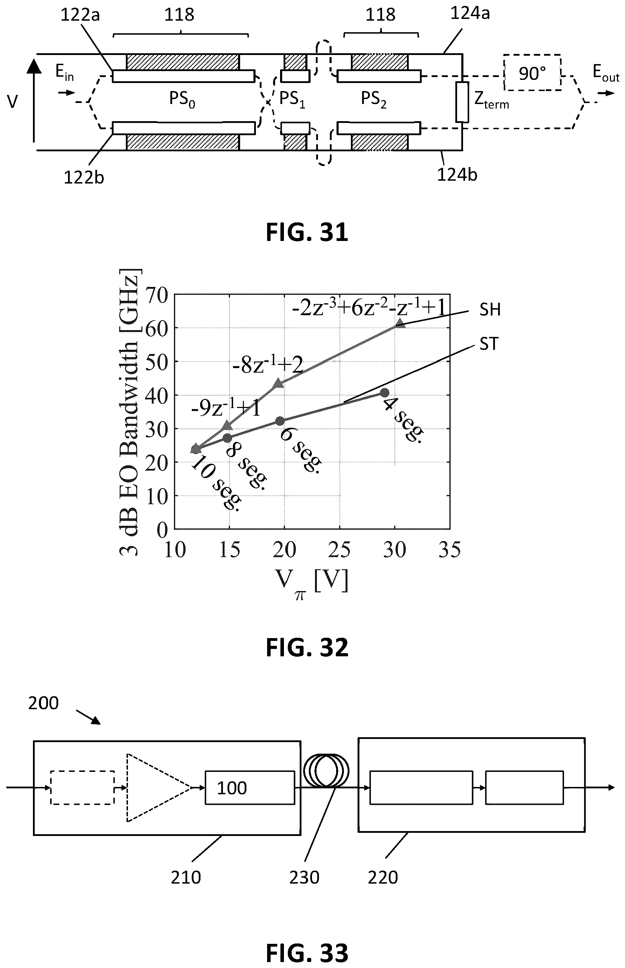

In embodiments of the present invention a length of the phase shifter 122a, 122b (along the length direction of the waveguide) may be varying between the different pairs of phase shifters. An example thereof is schematically illustrated in FIG. 31. In this embodiment the phase shifters have a different length. By doing so the tap resolution can be increased. The example of FIG. 31 can be considered as a continuous MZM design wherein the pair of phase shifters is interrupted for delays and crossings. Such a design allows to obtain more phase shift for the same total modulator length, as the number of interruptions can be reduced.

In embodiments of the present invention the structure may be completely defined in layout. Thus the response is fixed once these devices are manufactured.

Alternatively, in embodiments of the present invention an optical network may be inserted that allows switching between a direct connection of optical waveguides between adjacent segments and/or a crossing element 140 between the adjacent segments and/or a delay element 130 between the adjacent segments. Switching may be done between a direct connection, an optical delay line or an optical delay line and a crossing to tune the response after manufacturing. The switching may be implemented using optical switch elements.

In embodiments of the present invention the optical delay line may be followed by a crossing or vice versa. Different configurations are possible between two segments. The crossing may for example be inserted between 2 optical delay lines.

In embodiments of the present invention the optical delays of the delay lines may be chosen equal. In other embodiments this may not be the case in order to optimize the performance.

In embodiments of the present invention the segments may be chosen equal. In other embodiments the segments may differ to optimize performance.

In embodiments of the present invention the phase shifters may comprise different electrode structures. The electrode structures may for example be electrode structures with a single transmission line. The electrode structures not necessarily require an additional bias line. The only requirement is that phase shifters should be present in both arms (both optical waveguides 114a, 114b) of the MZM structure 100. A phase shifter typically may be implemented using a PN junction which behaves as a capacitor which loads the transmission line. Typically pairs of phase shifters are PN-junctions with abutted N- or P-regions. The invention is, however, not limited thereto. Any other phase shifter known by a person skilled in the art may be used (e.g. lateral PN, n-i-p-n). Also other materials like III-V compounds or more exotic materials such as polymers or thin films may be used for the phase shifter.

In embodiments of the present invention additional elements may be added in the optical delay line to tune the delay (and as such optimize the transfer function).

In embodiments of the present invention the electrical and optical wave may be propagating in the same direction. The invention is, however, not limited thereto. Equalization is also possible when both are counterpropagating.

A MZM 100 according to embodiments of the present invention may be used as an intensity modulator. In such embodiments a fixed DC-phase difference of 90° may be present between both arms (the first optical waveguide 114a and the second optical waveguide 114b). This is, however, not strictly required. Other operation modes are also possible.

In some embodiments of the present invention equalization may be obtained by an MZM which is not driven by a differential signal.

FIG. 32 shows the simulated 3 dB EO bandwidth in function of the halfwave voltage V_{π} of a standard MZM (ST) and of a shaped MZM (SH) in accordance with embodiments of the present invention. The ST curve shows the EO bandwidth as a function of V_{π} for the standard periodically loaded MZM with 4, 6, 8 and 10 segments. The SH curve shows the EO bandwidth as a function of V_{π} for a shaped MZM with 10 segments where various configurations of optical delay lines and crossings are used to boost the bandwidth. It is clear that for the same V_{π}, larger bandwidths can be obtained using an MZM in accordance with embodiments of the present invention.

It can be seen that the modulation efficiency can be traded for bandwidth. Decreasing the modulator length does exactly the same. It can be seen that for shaped MZMs higher bandwidths are possible for the same V_{π}. Shaping is, however, not limited thereto, as discussed before it can do much more than bandwidth enhancement.

In embodiments of the present invention the termination impedance of the modulator may be tuned to trade peaking for modulation efficiency.

In embodiments of the present invention at least some of the electro-optic phase shifters 122a, 122b are configured to operate as traveling-wave segments. It is an advantage of embodiments of the present invention that more phase shift per unit length is obtained since the number of intermediate interruptions is reduced. It is an advantage of embodiments of the present invention that a high tap accuracy can be obtained. When at least some of the electro-optic phase shifters are configured to operate as traveling-wave segments, the tap accuracy is determined by the length of the travelling wave segments, instead of the number of segments.

In embodiments of the present invention a plurality of electro-optic phase shifters may be connected to a transmission line. The resolution to realize a FIR filter tap in that case is determined by 1/N, with N the number of segments. However, as illustrated in FIG. 31 and explained in the description, the length of the phase shifters may be varied to increase the tap resolution. Assuming two elements with length L1 and L2, then the FIR filter tap coefficients are L1/(L1+L2) and L2/(L1+L2). This allows continuous scaling of the FIR filter coefficients. As an additional advantage, the modulation efficiency per unit length is higher as there are no intermediate interruptions anymore. In the latter case the segments need to be modeled as transmission lines rather than lumped elements. Also, the electrodes on which the signal travels from one segment to the other, can be viewed as being part of that segment, and modeled as such.

In a second aspect embodiments of the present invention relate to a communication link 200 which comprises a transmitter 210, a receiver 220, and an optical link 230 between the transmitter 210 and the receiver 220. An example of such a communication link is schematically drawn in FIG. 33. The transmitter 210 of such a communication link comprises a modulator 100 according to embodiments of the present invention. Such a communication link may for example be obtained by replacing the modulator of FIG. 1 with a modulator in accordance with embodiments of the present invention.

It is an advantage of embodiments of the present invention that the modulator according to embodiments of the present invention can be designed to have a specific transfer function and hence to compensate for bandwidth deterioration in the optical link.

In a third aspect embodiments of the present invention relate to a method for designing a Mach-Zehnder modulator 100 according to embodiments of the present invention. The method comprises introducing at least one crossing element 140 between two segments 118 in order to obtain a predefined transfer function. Additionally one or more delay elements 130 may be introduced. The desired transfer function may for example be defined in the z-domain and the positions of the at least one delay element and the at least one crossing element may be obtained therefrom as is illustrated in the description above. By introducing the at least one crossing element and, optionally, the at least one delay element between the segments, according to embodiments of the present invention, the shaped MZM may act as a FIR filter.

The scope of protection of the present invention is as defined in the appended claims. Any embodiment not falling within such scope should be construed as examples which do not describe parts of the invention.

## Claims

1. An electro-optic Mach-Zehnder modulator (100) comprising
- a first and a second optical waveguide (114a, 114b),
- an optical splitter (112) configured for splitting an incoming optical signal in a first optical signal over the first optical waveguide (114a) and a second optical signal over the second optical waveguide (114b) and an optical combiner (116) configured for combining the optical signals from the optical waveguides (114a, 114b),
- a plurality of pairs of electro-optic phase shifters (122a, 122b), for each pair one phase shifter (122a, 122b) per optical waveguide (114a, 114b), distributed over the length of the optical waveguides (114a, 114b), each pair forming a segment (118) of the modulator, wherein the electro-optic phase shifters are configured for phase-modulating the optical signals by means of an electrical signal,
- **characterized in that** the Mach-Zehnder modulator (100) comprises at least one crossing element (140) configured for crossing the first and the second optical waveguide between two segments (118).

2. An electro-optic Mach-Zehnder modulator (100) according to claim 1, the electro-optic Mach-Zehnder modulator comprising at least one delay element (130) configured for delaying the optical signals between two segments (118).

3. An electro-optic Mach-Zehnder modulator (100) according to any of the previous claims wherein the combiner (116) or splitter (112) comprises a 90° phase shifter for one of the optical waveguides (114a, 114b).

4. An electro-optic Mach-Zehnder modulator (100) according to any of the previous claims wherein a distance between adjacent segments (118) is the same for the different adjacent segments.

5. An electro-optic Mach-Zehnder modulator (100) according to any of the previous claims, the modulator (100) comprising an optical network which is configured for switching between a direct connection of optical waveguides between adjacent segments and/or a crossing element (140) between the adjacent segments and/or a delay element (130) between the adjacent segments.

6. An electro-optic Mach-Zehnder modulator (100) according to any of the claims 2 to 5 as long as dependent on claim 2 wherein the at least one delay element (130) comprises an optical building block configured for introducing optical delay.

7. An electro-optic Mach-Zehnder modulator (100) according to any of the previous claims wherein a length of the phase shifter (122a, 122b) is varying between the different pairs of phase shifters.

8. An electro-optic Mach-Zehnder modulator (100) according to any of the previous claims which is configured such that, in operation, the electrical and optical signal are propagating in the same direction.

9. An electro-optic Mach-Zehnder modulator (100) according to any of the claims 1 to 7 which is configured such that, in operation, the electrical and optical signal are counterpropagating.

10. An electro-optic Mach-Zehnder modulator (100) according to any of the previous claims, the modulator comprising one or more biasing circuits (126) configured for separately biasing at least one of the phase shifters (122a, 122b) of the phase shifter pairs.

11. A communication link (200) comprising a transmitter (210), a receiver (220), and an optical link (230) between the transmitter (210) and receiver (220) wherein the transmitter (210) comprises an electro-optic Mach-Zehnder modulator (100) according to any of the previous claims.

12. A method for designing a Mach-Zehnder modulator (100) according to any of the claims 1 to 10, the method comprising introducing at least one crossing element (140) between segments (118) of the modulator (100) in order to obtain a predefined transfer function.

## Patentansprüche

1. Ein Elektrooptischer Mach-Zehnder-Modulator (100), umfassend
- einen ersten und einen zweiten optischen Wellenleiter (114a, 114b),
- einen optischen Splitter (112), der zum Splitten eines eingehenden optischen Signals in ein erstes optisches Signal über den ersten optischen Wellenleiter (114a) und ein zweites optisches Signal über den zweiten optischen Wellenleiter (114b) konfiguriert ist, und einen optischen Kombinierer (116), der zum Kombinieren der optischen Signale aus den optischen Wellenleitern (114a, 114b) konfiguriert ist,
- eine Vielzahl von Paaren elektrooptischer Phasenschieber (122a, 122b), mit einem Phasenschieber (122a, 122b) für jedes Paar pro optischem Wellenleiter (114a, 114b), über die Länge der optischen Wellenleiter (114a, 114b) verteilt, wobei jedes Paar ein Segment (118) des Modulators bildet, wobei die elektrooptischen Phasenschieber zur Phasenmodulation der optischen Signale mittels eines elektrischen Signals konfiguriert sind,
- **dadurch gekennzeichnet, dass** der Mach-Zehnder-Modulator (100) mindestens ein Kreuzungselement (140) umfasst, das zum Kreuzen des ersten und des zweiten optischen Wellenleiters zwischen zwei Segmenten (118) konfiguriert ist.

2. Ein elektrooptischer Mach-Zehnder-Modulator (100) nach Anspruch 1, wobei der elektrooptische Mach-Zehnder-Modulator mindestens ein Verzögerungselement (130) umfasst, das zum Verzögern der optischen Signale zwischen zwei Segmenten (118) konfiguriert ist.

3. Ein elektrooptischer Mach-Zehnder-Modulator (100) nach einem der vorstehenden Ansprüche, wobei der Kombinierer (116) oder Splitter (112) einen 90°-Phasenschieber für einen der optischen Wellenleiter (114a, 114b) umfasst.

4. Ein elektrooptischer Mach-Zehnder-Modulator (100) nach einem der vorstehenden Ansprüche, wobei ein Abstand zwischen benachbarten Segmenten (118) für die verschiedenen benachbarten Segmente der gleiche ist.

5. Ein elektrooptischer Mach-Zehnder-Modulator (100) nach einem der vorstehenden Ansprüche, wobei der Modulator (100) ein optisches Netzwerk, das zum Umschalten zwischen einer direkten Verbindung optischer Wellenleiter zwischen benachbarten Segmenten konfiguriert ist, und/oder ein Kreuzungselement (140) zwischen den benachbarten Segmenten und/oder ein Verzögerungselement (130) zwischen den benachbarten Segmenten umfasst.

6. Ein elektrooptischer Mach-Zehnder-Modulator (100) nach einem der Ansprüche 2 bis 5, soweit von Anspruch 2 abhängig, wobei das mindestens eine Verzögerungselement (130) einen optischen Baustein umfasst, der zum Einführen einer optischen Verzögerung konfiguriert ist.

7. Ein elektrooptischer Mach-Zehnder-Modulator (100) nach einem der vorstehenden Ansprüche, wobei eine Länge des Phasenschiebers (122a, 122b) zwischen den verschiedenen Phasenschieberpaaren variiert.

8. Ein elektrooptischer Mach-Zehnder-Modulator (100) nach einem der vorstehenden Ansprüche, der konfiguriert ist, sodass sich im Betrieb das elektrische und optische Signal in die gleiche Richtung ausbreiten.

9. Ein elektrooptischer Mach-Zehnder-Modulator (100) nach einem der Ansprüche 1 bis 7, der konfiguriert ist, sodass sich im Betrieb das elektrische und optische Signal gegenläufig ausbreiten.

10. Ein elektrooptischer Mach-Zehnder-Modulator (100) nach einem der vorstehenden Ansprüche, wobei der Modulator eine oder mehrere Vorspannungsschaltungen (126) umfasst, die zum getrennten Vorspannen mindestens eines der Phasenschieber (122a, 122b) der Phasenschieberpaare konfiguriert sind.

11. Eine Kommunikationsverbindung (200) umfassend einen Sender (210), einen Empfänger (220) und eine optische Verbindung (230) zwischen dem Sender (210) und dem Empfänger (220), wobei der Sender (210) einen elektrooptischen Mach-Zehnder-Modulator (100) nach einem der vorstehenden Ansprüche umfasst.

12. Ein Verfahren zum Entwerfen eines Mach-Zehnder-Modulators (100) nach einem der Ansprüche 1 bis 10, wobei das Verfahren Einführen mindestens eines Kreuzungselements (140) zwischen Segmenten (118) des Modulators (100) umfasst, um eine vordefinierte Übertragungsfunktion zu erhalten.

## Revendications

1. Modulateur de Mach-Zehnder électro-optique (100) comprenant
- un premier et un deuxième guide d'ondes optique (114a, 114b),
- un séparateur optique (112) configuré pour séparer un signal optique entrant en un premier signal optique sur le premier guide d'ondes optique (114a) et un deuxième signal optique sur le deuxième guide d'ondes optique (114b) et un combineur optique (116) configuré pour combiner les signaux optiques provenant des guides d'ondes optiques (114a, 114b),
- une pluralité de paires de déphaseurs électro-optiques (122a, 122b), pour chaque paire un déphaseur (122a, 122b) par guide d'ondes optique (114a, 114b), répartis sur la longueur des guides d'ondes optiques (114a, 114b), chaque paire formant un segment (118) du modulateur, dans lequel les déphaseurs électro-optiques sont configurés pour moduler en phase les signaux optiques au moyen d'un signal électrique,
- **caractérisé en ce que** le modulateur de Mach-Zehnder (100) comprend au moins un élément de croisement (140) configuré pour croiser le premier et le deuxième guide d'ondes optique entre deux segments (118).

2. Modulateur de Mach-Zehnder électro-optique (100) selon la revendication 1, le modulateur de Mach-Zehnder électro-optique comprenant au moins un élément de retard (130) configuré pour retarder les signaux optiques entre deux segments (118).

3. Modulateur de Mach-Zehnder électro-optique (100) selon l'une quelconque des revendications précédentes, dans lequel le combineur (116) ou le séparateur (112) comprend un déphaseur de 90° pour l'un des guides d'ondes optiques (114a, 114b).

4. Modulateur de Mach-Zehnder électro-optique (100) selon l'une quelconque des revendications précédentes, dans lequel une distance entre des segments adjacents (118) est la même pour les différents segments adjacents.

5. Modulateur de Mach-Zehnder électro-optique (100) selon l'une quelconque des revendications précédentes, le modulateur (100) comprenant un réseau optique qui est configuré pour commuter entre une connexion directe de guides d'ondes optiques entre des segments adjacents et/ou un élément de croisement (140) entre les segments adjacents et/ou un élément de retard (130) entre les segments adjacents.

6. Modulateur de Mach-Zehnder électro-optique (100) selon l'une quelconque des revendications 2 à 5 pour autant qu'elles dépendent de la revendication 2, dans lequel l'au moins un élément de retard (130) comprend un bloc fonctionnel optique configuré pour introduire un retard optique.

7. Modulateur de Mach-Zehnder électro-optique (100) selon l'une quelconque des revendications précédentes, dans lequel une longueur du déphaseur (122a, 122b) varie entre les différentes paires de déphaseurs.

8. Modulateur de Mach-Zehnder électro-optique (100) selon l'une quelconque des revendications précédentes, qui est configuré de telle sorte que, en fonctionnement, le signal électrique et le signal optique se propagent dans la même direction.

9. Modulateur de Mach-Zehnder électro-optique (100) selon l'une quelconque des revendications 1 à 7, qui est configuré de telle sorte que, en fonctionnement, le signal électrique et le signal optique se propagent en sens contraire.

10. Modulateur de Mach-Zehnder électro-optique (100) selon l'une quelconque des revendications précédentes, le modulateur comprenant un ou plusieurs circuits de polarisation (126) configurés pour polariser séparément au moins l'un des déphaseurs (122a, 122b) des paires de déphaseurs.

11. Liaison de communication (200) comprenant un émetteur (210), un récepteur (220) et une liaison optique (230) entre l'émetteur (210) et le récepteur (220), dans laquelle l'émetteur (210) comprend un modulateur de Mach-Zehnder électro-optique (100) selon l'une quelconque des revendications précédentes.

12. Procédé de conception d'un modulateur de Mach-Zehnder (100) selon l'une quelconque des revendications 1 à 10, le procédé comprenant l'introduction d'au moins un élément de croisement (140) entre des segments (118) du modulateur (100) afin d'obtenir une fonction de transfert prédéfinie.
